# FASCICULE DE BREVET EUROPEEN

(11) **EP 3 361 874 B1**
(45) Date de publication et mention de la délivrance du brevet: **10.03.2021**
(21) Numéro de dépôt: 16781790.7
(22) Date de dépôt: 14.10.2016
(51) Int. Cl.: A23C 9/18, A23C 9/20

(54) **PRODUIT LAITIER SEC SOUS FORME SOLIDE ET SON PROCÉDÉ DE PRÉPARATION**
FESTES TROCKENMILCHPRODUKT, UND VERFAHREN ZUR DESSEN HERSTELLUNG
DRY DAIRY PRODUCT IN SOLID FORM, AND PROCESS OF MANUFACTURE

(30) Priorité: 15.10.2015 FR 1559823
(43) Date de publication de la demande: 22.08.2018
(73) Titulaire: Compagnie Laitiere Europeenne, 50890 Conde-sur-Vire (FR)
(72) Inventeur: MORELLE, Dominique, 49100 Angers (FR); LAROCHE, Christophe, 35300 Fougeres (FR); KERRIOU, Liliane, 35340 Liffre (FR)
(74) Mandataire: Gevers & Orès
(86) Numéro de dépôt international: PCT/EP2016/074675
(87) Numéro de publication internationale: WO 2017/064239

(56) Documents cités:
- EP-A1- 1 048 216
- CN-A- 102 845 526
- CN-A- 103 238 670
- CN-A- 104 719 481
- GB-A- 1 204 445
- US-A- 3 241 975

## Description

La présente invention se rapporte à un nouveau produit alimentaire consistant en des comprimés (ou tablettes), aussi désignés par granulés de lait sec densifiés, ainsi que leur procédé de fabrication. Selon un mode d'utilisation particulier, ce produit alimentaire est destiné à être mélangé avec un liquide, de préférence de l'eau, pour reconstituer un lait, de préférence un lait infantile.

Il est connu de longue date de préparer des comprimés de lait à partir de lait déshydraté en poudre. Outre le bénéfice en termes de gain de place de ce type de formulation, leur caractère déshydraté leur confère une bonne conservation et le dosage sous forme de comprimés une simplicité d'utilisation qui est tout particulièrement adaptée aux formulations de laits infantiles.

La Demande EP 1 048 216 propose par exemple la préparation par compaction d'un produit laitier sec sous forme de solide comprenant des particules de lait densifiées ; il apparait toutefois que pour que ce produit soit suffisamment solide, c'est-à-dire qu'il ne se casse pas ou ne s'effrite pas lors de sa conservation, sa préparation nécessite une compaction poussée qui nuit à sa dissolution ultérieure dans un liquide ; ainsi pour obtenir une forme solide ayant des propriétés satisfaisantes (densité, solidité, friabilité, rapidité de dissolution dans un liquide), il est nécessaire de lui ajouter des additifs choisis parmi les liants, les stabilisants, les émulsifiants et les agents mouillants.

La Demande EP 1 769 682 propose une alternative à l'utilisation d'additifs et à la compaction poussée décrite dans l'EP 1 048 216 pour la fabrication de formes solides de lait sec qui consiste à mettre en forme la poudre de lait sèche par compression, à l'humidifier puis à la sécher ; par ce procédé, une croute externe solide est formée tout en gardant une porosité de la forme solide compatible avec une dissolution rapide.

Dans le cadre de ses développements, la Demanderesse a mis au point un nouveau procédé et une nouvelle formulation de produit alimentaire laitier sous forme de comprimé qui ne présentent pas les inconvénients du procédé décrit dans l'EP 1 048 216.

La préparation de produits laitiers sous forme compressée est aussi décrite dans les documents CN 102 845 526 A et CN 104 719 481 A, par exemple.

L'invention repose sur l'utilisation de lactose pour compression en remplacement de tout ou partie du lactose habituellement présent dans les poudres de lait classiquement utilisées pour la préparation de produits laitiers secs ; l'utilisation de lactose pour compression permet la mise en œuvre d'un procédé simple qui conduit à un produit alimentaire sous forme solide ayant d'excellentes propriétés de conservation, de porosité, de dureté et de dissolution dans un liquide. En outre, ce produit est exempt de tout additif alimentaire et conserve la composition qualitative et quantitative des formulations existantes.

Un premier objet se rapporte ainsi à un procédé de préparation d'un produit laitier sec sous forme solide contenant de la matière grasse à une teneur comprise entre 0% et 40% en poids par rapport au poids total dudit produit laitier sec sous forme solide et ayant une densité comprise entre 0,5g/cm³ et 2g/cm³ et ne contenant pas de lubrifiants, d'agents glissants, d'agents mouillants, d'agents émulsifiants, ou d'agents désintégrants, ledit procédé comprenant les étapes suivantes :
a. préparation d'une poudre de particules de lait comprenant du lactose pour compression défini plus loin à une teneur comprise entre 5 et 40% en poids par rapport au poids total dudit produit laitier sec sous forme solide, ce lactose pour compression étant présent en plus du lactose éventuellement déjà présent dans la poudre de particules de lait ; il n'y a aucun ajout d'additif, d'excipient ou auxiliaire à la poudre de particules de lait utilisée et sa composition qualitative et quantitative est inchangée ; le lactose pour compression est ajouté à la poudre de particules de lait dans une étape finale de mélange à sec, ce mélange peut être réalisé en tour de séchage, par mélangeur, extrudeur ou tout autre procédé pour faire un ajout de poudre à sec dans les particules de lait ; optionnellement, des ingrédients d'intérêt nutritionnel sont ajoutés à la poudre de particules de lait, il s'agit d'ingrédients autorisés dans les formulations laitières infantiles selon la réglementation en vigueur tels que des vitamines, des minéraux, acides aminés, nucléotides, probiotiques, prébiotiques et épaississant (amidon, ...), dans le cas où de tels ingrédients sont ajoutés à la poudre de particules de lait, ils le sont avant le mélange avec le lactose pour compression ;
b. granulation de la poudre de particules de lait selon l'une des deux méthodes ci-dessous :
   b1. granulation par voie humide : mouillage du mélange de la poudre de particules de lait et de lactose pour compression obtenu à l'étape a) par addition d'une teneur en eau comprise entre 1% et 15% en poids par rapport au poids total de la poudre de particules de lait ; granulation dudit mélange ; et séchage de la poudre humide de granulés dudit mélange sous air chaud entre 40°C et 80°C pour obtenir une humidité libre résiduelle inférieure à 3% en poids et améliorer ainsi la coulabilité de ladite poudre de granulés pour les prochaines étapes ;
   b2. granulation sèche du mélange de poudre de lait et de lactose pour compression obtenu à l'étape a) ; cette étape peut être réalisée à l'aide d'un plateau granulateur et d'un tamisage ou encore d'un rouleau à compacter et d'un broyeur pour obtenir des granulés ; ce dernier mode de réalisation est préféré lorsque la poudre de particules de lait contient du lactose amorphe afin d'éviter sa recristallisation dans sa forme hydratée ;
c. tamisage de la poudre de granulés séchés obtenue à l'étape b) entre 250 µm et 2 mm ;
d. densification de la poudre de granulés séchés obtenue à l'étape c) et mise sous forme solide pour l'obtention du produit laitier sec sous forme solide, la force de compression appliquée est comprise entre 5 et 30 kN ; cette densification peut être mise en œuvre avec une machine à comprimés.

Si le produit laitier sec sous forme solide est principalement composé d'ingrédients d'origine laitière, il peut également comprendre des ingrédients ayant une origine autre que laitière.

L'obtention de forme solide de produit laitier sec de qualité satisfaisante par le procédé selon l'invention repose sur l'utilisation du lactose pour compression qui ne représente pas un additif mais vient remplacer toute ou partie du lactose naturellement présent dans la poudre de lait, et sur la mise en œuvre d'une étape de granulation.

Le lactose pour compression est un ingrédient usuellement utilisé comme excipient dans l'industrie pharmaceutique et est bien connu de l'homme du métier.

Par lactose pour compression, on entend au sens de la présente invention :
- du lactose granulé, c'est-à-dire du lactose α-monohydrate granulé comprenant un pourcentage de lactose amorphe inférieur à 10% en poids dont la granulométrie finale (diamètre médian) est comprise entre 80 et 250 µm ;
- du lactose Spray Dry, c'est-à-dire du lactose α-monohydrate spray dry comprenant un pourcentage de lactose amorphe inférieur à 15% en poids dont la granulométrie finale (diamètre médian) est comprise entre 80 et 250 µm ;
- du lactose anhydre, c'est-à-dire du lactose β anhydre comprenant un pourcentage de lactose amorphe inférieur à 5% en poids dont la granulométrie finale (diamètre médian) est comprise entre 80 et 250 µm ;
- du lactose amorphe dont la granulométrie finale (diamètre médian) est comprise entre 80 et 250 µm.

Les caractéristiques du lactose pour compression sont les suivantes : une densité de poudre de 0,4 à 0,9 g/cm³, de préférence, de 0,4 à 0,8 g/cm³, une surface spécifique de 0,05 à 0,5 m²/g et un pourcentage d'eau inférieur à 5,5% en poids.

Pour la mise en œuvre du procédé selon l'invention, le lactose pour compression vient en remplacement de tout ou partie du lactose déjà présent dans la poudre de particules de lait. En conséquence, il est bien entendu que ce procédé ne peut s'utiliser que pour la préparation de produit laitier solide comprenant du lactose.

L'utilisation de lactose pour compression permet d'avoir une poudre de granulés de particules de lait séchés qui se compresse mieux et un produit laitier sec de forme solide fini dont la désagrégation et la tenue mécanique sont améliorées.

Les poudres de particules de lait utilisables dans le procédé selon l'invention peuvent être du lait en poudre, du lait partiellement écrémé en poudre, du lait entier en poudre, du lait à matière grasse substituée par de la matière grasse végétale en poudre et du lait en poudre pour enfants (poudre de lait infantile). Le terme « lait pour enfants » ou « lait infantile » représente selon la présente invention les préparations pour nourrisson en poudre, les aliments diététiques destinés à des fins médicales spéciales, les préparations de suite en poudre et les aliments lactés pour enfant en bas âge en poudre selon les dispositions réglementaires en vigueur.

La composition des poudres de particules de lait n'a pas une influence majeure sur la conduite du procédé selon l'invention sous réserve qu'il leur soit ajouté du lactose pour compression tel que défini ci-avant à une teneur comprise entre 5 et 40% en poids par rapport au poids total dudit produit laitier sec sous forme solide.

De façon avantageuse, la mise en œuvre du procédé selon l'invention ne nécessite pas l'ajout d'additif aux particules de lait ; en particulier, le produit laitier sec sous forme solide obtenu par le procédé ne contient pas de lubrifiants, d'agents glissants, d'agents mouillants, d'agents émulsifiants, ou encore d'agents désintégrants.

A l'exception d'éventuels ingrédients d'intérêt nutritionnel dont l'ajout est autorisé par la réglementation sur les formulations laitières infantiles selon la réglementation en vigueur tels que des vitamines, des minéraux, nucléotides, probiotiques, prébiotiques et épaississant (amidon, ...) (préparations pour nourrissons et préparations de suite) et présents en faible quantité dans lesdites formulations, seuls de la poudre de lait et du lactose pour compression sont utilisés comme ingrédients et le produit laitier sec sous forme solide obtenu par le procédé selon l'invention a une composition et une structure homogènes.

Il est intéressant de noter que le procédé selon l'invention permet d'obtenir des formes solides (comprimés, tablettes...) de produit laitier dont la limite supérieure en matière grasse est de 40% correspondant à celle initialement contenue dans la poudre de particules de laits.

Le procédé selon l'invention peut être utilisé pour la préparation de produit laitier sec sous forme solide destiné à toute utilisation alimentaire.

Le procédé selon l'invention est de préférence mis en œuvre avec une poudre de lait infantile dans laquelle au moins 5% en poids par rapport au poids total de ladite poudre de lait infantile, du lactose est du lactose pour compression pour une utilisation en nutrition infantile ; à titre d'illustration, les caractéristiques de la poudre de particules de lait sont les suivantes : taille médiane des particules : entre 75 et 250 µm ; teneur en eau : entre 1% et 10 % ; densité apparente entre 0,4 et 0,8 ; densité tassée entre 0,5 et 0,9 et surface spécifique entre 0,05 et 0,5m²/g. La granulométrie des poudres est mesurée à l'aide d'un équipement de diffraction laser, les densités seront obtenues par vibration selon les normes de la PhEur, la surface spécifique avec un équipement type BET par adsorption d'azote.

Selon un autre de ses objets, l'invention se rapporte à un produit laitier sec de forme solide, aussi désigné comprimé ou tablette de produit laitier sec susceptible d'être obtenu par le procédé selon l'invention ; il s'agit donc plus spécifiquement d'un produit laitier solide contenant de la matière grasse à une teneur comprise entre 0% et 40% en poids par rapport au poids total dudit produit laitier sec sous forme solide et avec une densité comprise entre 0,5g/cm³ et 2g/cm³, de préférence, de l'ordre de 1 g/cm³, ledit produit laitier sec de forme solide est composé d'une poudre de particules de lait comprenant du lactose pour compression défini plus haut à une teneur comprise entre 5 et 40% en poids par rapport au poids total dudit produit laitier sec sous forme solide ; la poudre de particules de lait et le lactose pour compression étant tels que définis plus tôt.

Ce produit laitier solide présente l'avantage de ne pas comprendre d'additifs tels que les lubrifiants, agents glissants, agents mouillants, agents émulsifiants, agents désintégrants.

Dans un mode de réalisation, le produit laitier sec de forme solide selon l'invention est destiné à la préparation de lait infantile pour nourrisson et enfant en bas âge (préparation pour nourrissons et préparation de suite), a une densité comprise entre 0.5 g/ cm³ et 2 g/cm³ et ne contient pas de lubrifiants, d'agents glissants, d'agents mouillants, d'agents émulsifiants, ou d'agents désintégrants, et est constitué de :
- 85 à 100% en poids par rapport au poids total dudit produit laitier sec sous forme solide, d'une poudre de particule de lait elle-même constituée de 0 à 40% en poids par rapport au poids total dudit produit laitier sec sous forme solide, de matière grasse et 5 à 40% en poids par rapport au poids total dudit produit laitier sec sous forme solide, de lactose pour compression défini plus haut ;
- 0 à 15% en poids par rapport au poids total dudit produit laitier sec sous forme solide, d'ingrédients d'intérêt nutritionnel dont l'ajout est autorisé par la réglementation en vigueur sur les formulations laitières infantiles tels que des vitamines, des minéraux, acides aminés, nucléotides, probiotiques, prébiotiques et épaississant (amidon...).

Quelle que soit son application alimentaire, le produit laitier sec sous forme solide a de préférence un poids compris entre 1 et 6 g, le choix du poids exact dépend bien entendu de l'utilisation dudit produit ; sa forme est tridimensionnelle et peut être très variable (parallélépipède, sphère, cylindre, tronc, ou encore fantaisie : étoile, nuage...) ; les dimensions du produit laitier sec sous forme solide seront choisies pour faciliter son utilisation, par exemple, lorsque le produit laitier sec sous forme solide est une formulation de lait infantile, ses dimensions dépendront du poids de produit qui devra correspondre à une dose pour un volume d'eau particulier (par exemple 30 ml), on veillera à ce que ses dimensions soient telles qu'il puisse être facilement être introduit dans un biberon.

Avantageusement, les caractéristiques du produit laitier sec sous forme solide selon l'invention sont les suivantes :
- une dureté avant rupture comprise entre 10 N et 150 N, de préférence entre 20 et 80 N, de façon à éviter la destruction du solide compacté en cas de choc ;
- un résultat inférieur à 20% de poudre perdue lors du test de friabilité et d'abrasion ;
- la dissolution totale d'un produit laitier sec sous forme solide selon l'invention de poids compris entre 1 et 6 g dans 30 cm³ d'eau à température ambiante (autour de 20°C) est obtenue en 15 à 180 secondes sous agitation manuelle ; de préférence, cette dissolution est obtenue en moins de 60 secondes.

Les mesures de dureté seront réalisées sur un duromètre universel et les mesures de friabilité avec un test de friabilité conforme aux tests réalisés dans la PhEur.

Selon un mode de réalisation particulier de l'invention, le produit laitier sec sous forme solide est réalisé avec une poudre de lait infantile dans laquelle le lactose pour compression représente 5 à 40% en poids par rapport au poids total dudit produit laitier sec sous forme solide et dont la composition finale en ingrédients (qualitative et quantitative) respecte les règlements en vigueur relatifs aux laits infantiles.

Selon ce mode de réalisation particulier, la composition du produit laitier sec sous forme solide de lait infantile répond aux exigences réglementaires en vigueur.

### Figures

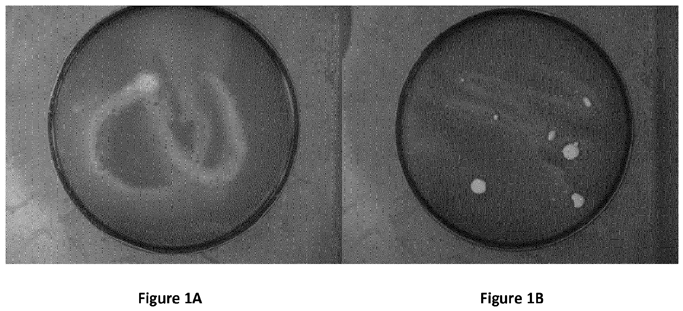

Les Figures 1A et 1B sont des photographies de filtres après passage du contenu des biberons comprenant respectivement les comprimés selon l'invention et des comprimés sans lactose pour compression ; alors qu'aucun morceau de comprimé n'est visible sur le filtre de la Figure 1A, celui de la Figure 1B contient de gros morceaux.

### Exemples

### I. Préparation d'un comprimé de lait infantile selon l'invention

Exemple de composition basique de lait infantile pour nourrisson et enfant en bas âge (valeurs pour 100g)

| | Formule Préparation pour nourrisson (I âge) | Formule Préparation de suite (II âge) | Formule Lait Croissance (III âge) |
|---|---|---|---|
| PROTEINES | 10,4 g | 12,1 g | 12,0 g |
| CARBOHYDRATES | 62,0 g | 60 g | 59,0 g |
| *Dont LACTOSE incluant 30g de lactose pour compression ajouté en dry mix* | *44,0 g* | *48 g* | *53,0 g* |
| MATIERE GRASSE | 24,0 g | 23 g | 23,0 g |
| MINERAUX | 2,0 g | 2,5 g | 3,5 g |
| VITAMINE A | 450 µg (1500 IU) | 450 µg (1500 IU) | 450 Mg (1500 IU) |
| VITAMINE D | 7,5 µg (300 IU) | 8,0 µg (320 IU) | 8,0 µg (320 IU) |
| VITAMINE E | 15,0 mg (22,4 IU) | 9,0 mg (13,4 IU) | 15,0 mg (22,4 IU) |
| VITAMINE K | 40 µg | 42 µg | 40 µg |
| VITAMINE B1 | 500 µg | 540 µg | 600 µg |
| VITAMINE B2 | 600 µg | 640 µg | 700 µg |
| VITAMINE B6 | 400 µg | 440 µg | 400 µg |
| VITAMINE B12 | 1 µg | 1 µg | 1,0 µg |
| VITAMINE C | 70 mg | 70 mg | 70 mg |
| ACIDE FOLIQUE | 65 µg | 70 µg | 70 µg |
| ACIDE PANTOTHENIQUE | 3,2 mg | 3,2 mg | 3,2 mg |
| NIACINE | 4 mg | 4 mg | 4,0 mg |
| BIOTINE | 16 µg | 16 µg | 16 µg |
| EAU | 1,6 g | 2,4 g | 2,5 g |

Les caractéristiques des poudres de particules de lait utilisées sont les suivantes :
- taille médian par diffraction laser : 138µm
- % eau obtenue par un Kharl Fischer: 1,3%
- densité apparente réalisée selon la PhEur: 0,5
- densité tassée réalisée selon la PhEur : 0,6
- surface Spécifique obtenue avec un BET : 0,1 m²/g
celles du lactose pour compression utilisé :
- taille médian par diffraction laser : 150µm
- % eau obtenue par un Kharl Fischer : 4,6%
- densité apparente réalisée selon la PhEur : 0,5
- densité tassée réalisée selon la PhEur : 0,7
- surface Spécifique obtenue avec un BET 0,3 m₂/g
- % de lactose amorphe obtenu par une DVS (Dynamic Vapor Sorption) : 8%

Cette poudre de lait infantile comprenant 30% en poids de lactose pour compression est ensuite mouillée par un ajout de 6% d'eau ; granulée puis séchée sous air chaud de 50°C ; tamisée sur un tamis ayant un seuil de coupure de 800 µm et comprimée à 8 kN.
Le comprimé obtenu a les caractéristiques suivantes :
- masse de 4,5 g
- densité 0,8g/cm³
- temps de dissolution d'un à huit comprimés dans 30 CC à 240 CC d'eau sous agitation mécanique <60s
- résistance 20N à 30N
- test de friabilité/vibration <20% de perte.

### II. Essais comparatifs de dissolution

Quatre comprimés issus du procédé précédent et quatre comprimés issus du même procédé sans Lactose pour compression sont placés chacun dans un biberon de 120 cc d'eau à température ambiante puis agités pendant 60s.

Le contenu de chaque biberon est alors filtré sur un tamis de 200µm.

Les photographies des Figures 1A et 1B représentent chacun des filtres après passage du contenu des biberons comprenant respectivement les comprimés selon l'invention et des comprimés sans lactose pour compression ; alors qu'aucun morceau de comprimé n'est visible sur le filtre de la Figure 1A, celui de la Figure 1B contient de gros morceaux. Ainsi, il apparait que seuls les comprimés selon l'invention sont totalement dissous alors que ceux qui ne contiennent pas de lactose pour compression ne sont pas totalement dissous. Ces essais illustrent bien la nécessité de la présence du lactose pour compression pour observer une dissolution satisfaisante.

## Revendications

1. Procédé de préparation d'un produit laitier sec sous forme solide comprenant de la matière grasse à une teneur comprise entre 0% et 40% en poids par rapport au poids total dudit produit laitier sec sous forme solide, ayant une densité comprise entre 0,5g/cm³ à 2g/cm³ et ne contenant pas de lubrifiants, d'agents glissants, d'agents mouillants, d'agents émulsifiants, ou d'agents désintégrants comprenant les étapes suivantes :
a. préparation d'une poudre de particules de lait comprenant du lactose pour compression à une teneur comprise entre 5 et 40% en poids par rapport au poids total dudit produit laitier sec sous forme solide, ce lactose pour compression étant présent en plus
du lactose éventuellement déjà présent dans la poudre de particules de lait et, optionnellement, des ingrédients d'intérêt nutritionnel ; le lactose pour compression étant ajouté dans une étape finale de mélange à sec et est choisi parmi le lactose α-monohydrate granulé comprenant un pourcentage de lactose amorphe inférieur à 10% en poids dont la granulométrie finale (diamètre médian) est comprise entre 80 et 250 µm, le lactose α-monohydrate Spray Dry comprenant un pourcentage de lactose amorphe inférieur à 15% en poids dont la granulométrie finale (diamètre médian) est comprise entre 80 et 250 µm,
le lactose β anhydre comprenant un pourcentage de lactose amorphe inférieur à 5% en poids dont la granulométrie finale (diamètre médian) est comprise entre 80 et 250 µm, et le lactose amorphe dont la granulométrie finale (diamètre médian) est comprise entre 80 et 250 µm ;
b. granulation de la poudre de particules de lait selon l'une des deux méthodes ci-dessous :
b1. granulation par voie humide : mouillage du mélange obtenu à l'étape a) par addition d'une teneur en eau comprise entre 1% et 15% en poids par rapport au poids total de la poudre de particules de lait ; granulation dudit mélange ; et séchage de la poudre humide de granulés dudit mélange sous air chaud entre 40°C et 80°C pour obtenir une humidité libre résiduelle inférieure à 3% en poids ;
b2. granulation sèche du mélange obtenu à l'étape a) ;
c. tamisage de la poudre de granulés séchés obtenue à l'étape b) entre 250 µm et 2 mm ;
d. densification de la poudre de granulés séchés obtenue à l'étape c) et mise sous forme solide pour l'obtention du produit laitier sec sous forme solide, la force de compression appliquée est comprise entre 5 et 30 kN.

2. Procédé de préparation d'un produit laitier sec sous forme solide selon la revendication 1, **caractérisé en ce que** le lactose pour compression a les caractéristiques suivantes : une densité de poudre de 0,4 à 0,9 g/cm³, une surface spécifique de 0,05 à 0,5 m²/g et un pourcentage d'eau inférieur à 5,5% en poids.

3. Procédé de préparation d'un produit laitier sec sous forme solide selon l'une quelconque des revendications 1 ou 2, **caractérisé en ce que** la poudre de particules de lait est choisie parmi le lait en poudre, le lait partiellement écrémé en poudre, le lait entier en poudre, le lait à matière grasse substituée par de la matière grasse végétale en poudre et le lait en poudre pour enfants.

4. Produit laitier sec sous forme solide susceptible d'être obtenu par le procédé selon l'une quelconque des revendications 1 à 3, comprenant de la matière grasse à une teneur comprise entre 0% et 40% en poids par rapport au poids total dudit produit laitier sec sous forme solide, du lactose pour compression choisi parmi le lactose α-monohydrate granulé comprenant un pourcentage de lactose amorphe inférieur à 10% en poids dont la granulométrie finale (diamètre médian) est comprise entre 80 et 250 µm, le lactose α-monohydrate Spray Dry comprenant un pourcentage de lactose amorphe inférieur à 15% en poids dont la granulométrie finale (diamètre médian) est comprise entre 80 et 250 µm, le lactose β anhydre comprenant un pourcentage de lactose amorphe inférieur à 5% en poids dont la granulométrie finale (diamètre médian) est comprise entre 80 et 250 µm, et le lactose amorphe dont la granulométrie finale (diamètre médian) est comprise entre 80 et 250 µm, ledit lactose de compression étant présent à une teneur comprise entre 5 et 40% en poids par rapport au poids total dudit produit laitier sec sous forme solide, ledit produit ayant un poids compris entre 1 et 6g et une densité comprise entre 0,5g/cm³ à 2g/cm³.

5. Produit laitier sec de forme solide ayant une densité comprise entre 0.5 g/cm³ et 2 g/cm³ et ne contenant pas de lubrifiants, d'agents glissants, d'agents mouillants, d'agents émulsifiants, ou d'agents désintégrants, destiné à la préparation de lait infantile pour nourrisson et enfant en bas âge constitué de :
- 85 à 100% en poids par rapport au poids total dudit produit laitier sec sous forme solide d'une poudre de particules de lait elle-même constituée de 0 à 40% en poids par rapport au poids total dudit produit laitier sec sous forme solide de matière grasse , de 5 à 40% en poids par rapport au poids total dudit produit laitier sec sous forme solide de lactose pour compression choisi parmi le lactose α-monohydrate granulé comprenant un pourcentage de lactose amorphe inférieur à 10% en poids dont la granulométrie finale (diamètre médian) est comprise entre 80 et 250 µm, le lactose α-monohydrate Spray Dry comprenant un pourcentage de lactose amorphe inférieur à 15% en poids dont la granulométrie finale (diamètre médian) est comprise entre 80 et 250 µm, le lactose β anhydre comprenant un pourcentage de lactose amorphe inférieur à 5% en poids dont la granulométrie finale (diamètre médian) est comprise entre 80 et 250 µm, et le lactose amorphe dont la granulométrie finale (diamètre médian) est comprise entre 80 et 250 µm ;
- 0 à 15% en poids par rapport au poids total dudit produit laitier sec sous forme solide d'ingrédients nutritionnels dont l'ajout est autorisé par la réglementation en vigueur sur les formulations laitières infantiles.

6. Produit laitier sec sous forme solide selon la revendication 5, **caractérisé en ce que** la poudre de particules de lait est choisie parmi le lait en poudre, le lait partiellement écrémé en poudre, le lait entier en poudre, le lait à matière grasse substituée par de la matière grasse végétale en poudre et le lait en poudre pour enfants.

7. Produit laitier sec sous forme solide selon l'une quelconque des revendications 5 à 6, **caractérisé en ce qu'**il a une dureté avant rupture comprise entre 10 N et 150 N, un résultat inférieur à 20% de poudre perdue lors du test de friabilité et d'abrasion mesurée selon la norme PhEur, et une dissolution totale dans 30 ml d'eau en moins de 60 secondes sous agitation manuelle pour un produit laitier sec sous forme solide représentant un poids de 1 à 6g.

## Patentansprüche

1. Verfahren zur Herstellung eines festen Trockenmilchprodukts, das Fett mit einem Gehalt zwischen 0 Gewichts-% und 40 Gewichts-% in Bezug auf das Gesamtgewicht des festen Trockenmilchprodukts umfasst, eine Dichte zwischen 0,5 g/cm³ bis 2 g/cm³ aufweist und keine Schmiermittel, Gleitmittel, Benetzungsmittel, Emulgatoren oder Zerfallsmittel enthält, umfassend die folgenden Schritte:
a. Herstellung eines Milchteilchenpulvers, umfassend Lactose zur Kompression mit einem Gehalt zwischen 5 und 40 Gewichts-% in Bezug auf das Gesamtgewicht des festen Trockenmilchprodukts, wobei diese Lactose zur Kompression zusätzlich zu der eventuell bereits im Milchteilchenpulver vorhandenen Lactose vorliegt, und wahlweise Zutaten mit Nährwert; wobei die Lactose zur Kompression in einem abschließenden Trockenmischschritt hinzugefügt wird und ausgewählt wird aus granuliertem α-Lactosemonohydrat, umfassend einen Prozentsatz an amorpher Lactose von weniger als 10 Gewichts-%, dessen abschließende Korngröße (medianer Durchschnitt) zwischen 80 und 250 µm beträgt, α-Lactosemonohydrat-Trockenspray, umfassend einen Prozentsatz an amorpher Lactose von weniger als 15 Gewichts-%, dessen abschließende Korngröße (medianer Durchschnitt) zwischen 80 und 250 µm beträgt, wasserfreier β-Lactose, umfassend einen Prozentsatz an amorpher Lactose von weniger als 5 Gewichts-%, deren abschließende Korngröße (medianer Durchschnitt) zwischen 80 und 250 µm beträgt, und amorpher Lactose, deren abschließende Korngröße (medianer Durchschnitt) zwischen 80 und 250 µm beträgt;
b. Granulierung des Milchteilchenpulvers gemäß einem der zwei nachstehenden Verfahren;
b.1. Feuchtgranulierung: Benetzen des im Schritt a) erhaltenen Gemischs durch Zugabe eines Wassergehalts zwischen 1 Gewichts-% und 15 Gewichts-% in Bezug auf das Gesamtgewicht des Milchteilchenpulvers; Granulierung des Gemischs; und Trocknung des feuchten Granulatpulvers des Gemischs unter Heißluft zwischen 40 °C und 80 °C, um eine freie Restfeuchtigkeit von weniger als 3 Gewichts-% zu erhalten;
b.2. Trockengranulierung des im Schritt a) erhaltenen Gemischs;
c. Siebung des im Schritt b) erhaltenen getrockneten Granulatpulvers zwischen 250 µm und 2 mm;
d. Verdichtung des im Schritt c) erhaltenen getrockneten Granulatpulvers und Festformgebung zum Erhalten des festen Trockenmilchprodukts, wobei die angelegte Kompressionskraft zwischen 5 und 30 kN beträgt.

2. Verfahren zur Herstellung eines festen Trockenmilchprodukts nach Anspruch 1, **dadurch gekennzeichnet, dass** die Lactose zur Kompression die folgenden Eigenschaften aufweist: eine Pulverdichte von 0,4 bis 0,9 g/cm³, eine spezifische Oberfläche von 0,05 bis 0,5 m²/g und einen Wasserprozentsatz von weniger als 5,5 Gewichts-%.

3. Verfahren zur Herstellung eines festen Trockenmilchprodukts nach einem der Ansprüche 1 oder 2, **dadurch gekennzeichnet, dass** das Milchteilchenpulver ausgewählt ist aus Milchpulver, teilentrahmtem Milchpulver, Vollmilchpulver, Milchpulver mit durch Pflanzenfett ersetztem Fett und Milchpulver für Kinder.

4. Festes Trockenmilchprodukt, das durch das Verfahren nach einem der Ansprüche 1 bis 3 erhalten werden kann, umfassend Fett mit einem Gehalt zwischen 0 Gewichts-% und 40 Gewichts-% in Bezug auf das Gesamtgewicht des festen Trockenmilchprodukts, Lactose zur Kompression, ausgewählt aus granuliertem α-Lactosemonohydrat, umfassend einen Prozentsatz an amorpher Lactose von weniger als 10 Gewichts-%, dessen abschließende Korngröße (medianer Durchschnitt) zwischen 80 und 250 µm beträgt, α-Lactosemonohydrat-Trockenspray, umfassend einen Prozentsatz an amorpher Lactose von weniger als 15 Gewichts-%, dessen abschließende Korngröße (medianer Durchschnitt) zwischen 80 und 250 µm beträgt, wasserfreier β-Lactose, umfassend einen Prozentsatz an amorpher Lactose von weniger als 5 Gewichts-%, deren abschließende Korngröße (medianer Durchschnitt) zwischen 80 und 250 µm beträgt, und amorpher Lactose, deren abschließende Korngröße (medianer Durchschnitt) zwischen 80 und 250 µm beträgt; wobei die Lactose zur Kompression mit einem Gehalt zwischen 5 und 40 Gewichts-% in Bezug auf das Gesamtgewicht des festen Trockenmilchprodukts vorliegt, wobei das Produkt ein Gewicht zwischen 1 und 6 g und eine Dichte zwischen 0,5 g/cm³ und 2 g/cm³ aufweist.

5. Festes Trockenmilchprodukt, das eine Dichte zwischen 0,5 g/cm³ und 2 g/cm³ aufweist und keine Schmiermittel, Gleitmittel, Benetzungsmittel, Emulgatoren oder Zerfallsmittel enthält, das zur Herstellung von Kindermilch für Säuglinge und Kleinkinder vorgesehen ist, bestehend aus:
- zu 85 bis 100 Gewichts-% in Bezug auf das Gesamtgewicht des festen Trockenmilchprodukts aus einem Milchteilchenpulver, das selbst aus 0 bis 40 Gewichts-% in Bezug auf das Gesamtgewicht des festen Trockenmilchprodukts aus Fett besteht, zu 5 bis 40 Gewichts-% in Bezug auf das Gesamtgewicht des festen Trockenmilchprodukts aus Lactose zur Kompression, ausgewählt aus granuliertem α-Lactosemonohydrat, umfassend einen Prozentsatz an amorpher Lactose von weniger als 10 Gewichts-%, dessen abschließende Korngröße (medianer Durchschnitt) zwischen 80 und 250 µm beträgt, α-Lactosemonohydrat-Trockenspray, umfassend einen Prozentsatz an amorpher Lactose von weniger als 15 Gewichts-%, dessen abschließende Korngröße (medianer Durchschnitt) zwischen 80 und 250 µm beträgt, wasserfreier β-Lactose, umfassend einen Prozentsatz an amorpher Lactose von weniger als 5 Gewichts-%, deren abschließende Korngröße (medianer Durchschnitt) zwischen 80 und 250 µm beträgt, und amorpher Lactose, deren abschließende Korngröße (medianer Durchschnitt) zwischen 80 und 250 µm beträgt;
- zu 0 bis 15 Gewichts-% in Bezug auf das Gesamtgewicht des festen Trockenmilchprodukts aus Nahrungszutaten, deren Zugabe von der geltenden Gesetzgebung bezüglich Milchformulierungen für Kleinkinder genehmigt ist.

6. Festes Trockenmilchprodukt nach Anspruch 5, **dadurch gekennzeichnet, dass** das Milchteilchenpulver ausgewählt ist aus Milchpulver, teilentrahmtem Milchpulver, Vollmilchpulver, Milchpulver mit durch Pflanzenfett ersetztem Fett und Milchpulver für Kinder.

7. Festes Trockenmilchprodukt nach einem der Ansprüche 5 bis 6, **dadurch gekennzeichnet, dass** es eine Bruchfestigkeit zwischen 10 N und 150 N, ein Ergebnis von weniger als 20 % verdorbenem Pulver bei dem Versprödungs- und Abriebtest, nach der PhEur-Norm gemessen, und eine vollständige Auflösung in 30 ml Wasser unter 60 Sekunden bei manuellem Rühren für ein festes Trockenmilchprodukt mit einem Gewicht von 1 bis 6 g aufweist.

## Claims

1. Method for preparing a dry dairy product in solid form comprising fat at a content comprised between 0% and 40% by weight relative to the total weight of said dry dairy product in solid form, having a density comprised between 0.5g/cm³ to 2g/cm³ and not containing lubricants, sliding agents, wetting agents, emulsifying agents, or disintegrating agents comprising the following steps:
a. preparing a milk particles powder comprising lactose for compression at a content comprised between 5 and 40% by weight relative to the total weight of said dry dairy product in solid form, this lactose for compression being present in addition to the lactose possibly already present in the milk particles powder and, optionally, ingredients of nutritional interest; the lactose for compression being added in a final dry mixing step and is chosen from among granulated α-monohydrate lactose comprising a percentage of amorphous lactose less than 10% by weight of which the final grain size (median diameter) is comprised between 80 and 250µm, the Spray Dry α-monohydrate lactose comprising a percentage of amorphous lactose less than 15% by weight of which the final grain size (median diameter) is comprised between 80 and 250µm, the β-anhydrous lactose comprising a percentage of amorphous lactose less than 5% by weight of which the final grain size (median diameter) is comprised between 80 and 250µm, and the amorphous lactose of which the final grain size (median diameter) is comprised between 80 and 250µm;
b. granulation of the milk particles powder according to one of the two methods below:
b1. wet granulation: wetting of the mixture obtained in step a) by addition of a water content comprised between 1% and 15% by weight relative to the total weight of the milk particles powder; granulation of said mixture; and drying of the wet powder of granulates of said mixture under hot air between 40°C and 80°C to obtain a residual free humidity less than 3% by weight;
b2. dry granulation of the mixture obtained in step a);
c. sifting of the powder of dried granulates obtained in step b) between 250µm and 2mm;
d. densifying of the powder of dried granulates obtained in step c) and put in solid form to obtain the dry dairy product in solid form, the compression force applied is comprised between 5 and 30kN.

2. Method for preparing a dry dairy product in solid form according to claim 1, **characterised in that** the lactose for compression has the following features: a powder density of 0.4 to 0.9g/cm³, a specific surface of 0.05 to 0.5m²/g and a percentage of water less than 5.5% by weight.

3. Method for preparing a dry dairy product in solid form according to any one of claims 1 or 2, **characterised in that** the milk particles powder is chosen from among powdered milk, powdered semi-skimmed milk, powdered whole milk, the milk fat substituted by powdered vegetable fat and powdered infant milk.

4. Dry dairy product in solid form obtainable by the method according to any one of claims 1 to 3, comprising fat at a content comprised between 0% and 40% by weight relative to the total weight of said dry dairy product in solid form, of the lactose for compression chosen from among granulated α-monohydrate lactose comprising a percentage of amorphous lactose less than 10% by weight of which the final grain size (median diameter) is comprised between 80 and 250µm, the Spray Dry α-monohydrate lactose comprising a percentage of amorphous lactose less than 15% by weight of which the final grain size (median diameter) is comprised between 80 and 250µm, the β-anhydrous lactose comprising a percentage of amorphous lactose less than 5% by weight of which the final grain size (median diameter) is comprised between 80 and 250µm, and the amorphous lactose of which the final grain size (median diameter) is comprised between 80 and 250µm, said compression lactose being present at a content comprised between 5 and 40% by weight relative to the total weight of said dry dairy product in solid form, said product having a weight comprised between 1 and 6g and a density comprised between 0.5 and 2g/cm³.

5. Dry dairy product in solid form having a density comprised between 0.5g/cm³ and 2g/cm³ and not containing lubricants, sliding agents, wetting agents, emulsifying agents, or disintegrating agents, intended for the preparation of infant milk for babies and infants constituted of:
- 85 to 100% by weight relative to the total weight of said dry dairy product in solid form of a milk particles powder itself constituted of 0 to 40% by weight relative to the total weight of said dry dairy product in solid form of fat, of 5 to 40% by weight relative to the total weight of said dry dairy product in solid form of lactose for compression chosen from among granulated α-monohydrate lactose comprising a percentage of amorphous lactose less than 10% by weight of which the final grain size (median diameter) is comprised between 80 and 250µm, the Spray Dry α-monohydrate lactose comprising a percentage of amorphous lactose less than 15% by weight of which the final grain size (median diameter) is comprised between 80 and 250µm, the β-anhydrous lactose comprising a percentage of amorphous lactose less than 5% by weight of which the final grain size (median diameter) is comprised between 80 and 250µm, and the amorphous lactose of which the final grain size (median diameter) is comprised between 80 and 250µm;
- 0 to 15% by weight relative to the total weight of said dry dairy product in solid form of nutritional ingredients of which the addition is authorised by the regulations in force on infant milk formulas.

6. Dry dairy product in solid form according to claim 5, **characterised in that** the milk particles powder is chosen from among powdered milk, powdered semi-skimmed milk, powdered whole milk, the milk fat substituted by powdered vegetable fat and powdered infant milk.

7. Dry dairy product in solid form according to any one of claims 5 to 6, **characterised in that** it has a pre-breaking hardness comprised between 10N and 150N, a result less than 20% of powder lost during the brittleness test and the abrasion measured according to the PhEur standard, and a total dissolution in 30ml of water in less than 60 seconds while manually stirring for a dry dairy product in solid form representing a weight of 1 to 6g.
